# FASCICULE DE BREVET EUROPEEN

(11) **EP 3 800 090 B1**
(45) Date de publication et mention de la délivrance du brevet: **22.12.2021**
(21) Numéro de dépôt: 20197387.2
(22) Date de dépôt: 22.09.2020
(51) Int. Cl.: B60P 3/22

(54) **VÉHICULE COMBINÉ HYDROCUREUR**
KOMBINIERTES ROHRREINIGUNGSFAHRZEUG
COMBINED SEWER-CLEANING VEHICLE

(30) Priorité: 01.10.2019 FR 1910865
(43) Date de publication de la demande: 07.04.2021
(73) Titulaire: Rivard, 49640 Daumeray (FR)
(72) Inventeur: Airiau, Paul, 49125 TIERCE (FR)
(74) Mandataire: Cabinet HERRBURGER

(56) Documents cités:
- EP-A1- 2 458 099
- FR-A1- 3 051 743

## Description

### Domaine de l'invention

La présente invention concerne le domaine des véhicules de nettoyage et de collecte d'effluents travaillant par tournées qui sont couramment nommés par les spécialistes combinés hydrocureurs.

De tels véhicules combinés hydrocureurs qui sont polyvalents sont spécialement adaptés à effectuer différents types de nettoyage tels qu'à titre d'exemple, le nettoyage de cuves à fuel, de séparateurs d'hydrocarbures, de fosses septiques, de bacs à graisse ou de réseaux d'égouts.

### Etat de la technique

Ces véhicules, qui doivent satisfaire à une réglementation très stricte sont constitués par un tracteur ou un porteur coopérant avec une citerne comportant à sa partie interne d'une part, un premier compartiment ou cuve à boues situé à l'arrière du véhicule et équipé d'une pompe à vide raccordée à un tuyau d'aspiration enroulé sur un tambour rotatif fixé à une ossature mobile en rotation autour d'un axe vertical montée à la partie supérieure de la citerne, et d'autre part, un second compartiment ou cuve à eau équipé d'une pompe haute pression raccordée à un flexible de nettoyage enroulé sur un enrouleur mobile en rotation autour d'un axe horizontal monté également à la partie supérieure de la citerne, à l'avant du tambour d'enroulement du tuyau d'aspiration.

Le tracteur ou le porteur des véhicules hydrocureurs coopère également avec un bras de travail télescopique mobile entre une position déployée et une position rétractée qui porte et guide le tuyau d'aspiration et le flexible de nettoyage au cours de leur enroulement et de leur déroulement.

Dans les véhicules combinés hydrocureurs de ce type, la pompe à vide sert à diminuer la pression régnant dans la cuve à boues de façon à permettre l'aspiration d'effluents à l'aide du tuyau d'aspiration dont une extrémité plonge dans les effluents à pomper tandis que l'extrémité opposée est raccordée à un tuyau de remplissage lui-même raccordé à la pompe à vide et équipé d'une vanne de remplissage qui est montée à la partie externe de la citerne.

Le flexible de nettoyage est, quant à lui, équipé d'une tête de nettoyage haute pression.

Il est à noter que, dans le cas particulier du nettoyage de réseaux d'égouts ou de réservoirs, les véhicules combinés hydrocureurs doivent pouvoir ajouter dans le milieu à traiter des quantités d'eau sous pression très importantes pouvant atteindre 300 litres / minute, voire plus.

Le tambour d'enroulement du tuyau d'aspiration permet de stoc-ker une longueur de 30 m de tuyau, de sorte que l'opérateur n'ait pas de raccordements à effectuer entre plusieurs tuyaux d'aspiration.

Dans les véhicules combinés hydrocureurs, le bras de travail télescopique est monté solidairement en rotation dans un plan horizontal sur l'ossature du tambour d'enroulement du tuyau d'aspiration, ce dans une position dans laquelle il est orienté essentiellement radialement par rapport au tambour d'enroulement du tuyau d'aspiration.

Par suite, l'extrémité libre de ce bras de travail ne peut être située qu'à une distance minimum de cette ossature qui correspond à la longueur minimum de celui-ci en position rétractée.

Il en résulte que le véhicule combiné hydrocureur ne peut pas travailler à proximité immédiate de la citerne, ou en d'autres termes, que sa zone de travail ou de couverture est obligatoirement relativement éloignée de celui-ci.

Or, cette impossibilité de travailler au plus près du véhicule, en particulier de ses côtés peut s'avérer très gênante, notamment en milieu urbain, en présence d'obstacles tels que des murs, arbres, véhicules en stationnement, ou mobiliers urbains.

Le document EP 2 458 099 A1 montre un véhicule hydrocureur selon le préambule de la première revendication.

### But de l'invention

La présente invention a pour objet de remédier à ces inconvénients.

### Exposé et avantages de l'invention

A cet effet, l'invention propose un véhicule combiné hydrocureur du type susmentionné dans lequel le bras de travail télescopique est équipé à son extrémité libre d'un dispositif de déroulement automatique du tuyau d'aspiration ainsi que d'un dispositif de déroulement automatique du flexible de nettoyage.

L'enroulement du tuyau d'aspiration et l'enroulement du flexible de nettoyage sont, quant à eux, commandés par le tambour d'enroulement de ce tuyau et par l'enrouleur de ce flexible qui sont des éléments moteurs.

Selon l'invention, le regroupement des dispositifs d'enroulement et de déroulement du tuyau d'aspiration et du flexible de nettoyage permet de simplifier notablement la configuration des composants du véhicule et de faciliter leur mise en œuvre sur le chantier.

De plus, selon l'invention, le bras de travail télescopique est articulé autour d'un axe de réglage vertical solidaire de l'ossature du tambour d'enroulement du tuyau d'aspiration de façon à pouvoir être déplacé dans un plan horizontal entre, d'une part, une position ouverte dans laquelle il est orienté essentiellement radialement par rapport au tambour d'enroulement du tuyau d'aspiration et d'autre part, une position fermée dans laquelle il est rabattu vers ce tambour d'enroulement.

Dans cette dernière position, l'extrémité libre du bras de travail télescopique peut être notablement plus proche du tambour d'enroulement du tuyau d'aspiration de sorte que la zone de couverture du véhicule soit plus proche de celui-ci.

Selon l'invention, l'angle du bras de travail télescopique entre la position ouverte et la position fermée est avantageusement de l'ordre de 110°.

Cette possibilité de rabattement du bras de travail flexible correspond à une caractéristique très avantageuse du véhicule combiné hydrocureur qui fait l'objet de l'invention dans la mesure où elle permet d'augmenter dans une large mesure, la zone de couverture de celui-ci.

Cette zone de couverture est, plus précisément, subdivisée en une première zone de couverture ou zone de couverture éloignée correspondant à un réglage du bras de travail télescopique en position ouverte et en une seconde zone de couverture ou zone de couverture rapprochée dans laquelle le bras de travail télescopique est réglé en position fermée.

Il est à noter que la zone de couverture éloignée correspond à la zone de couverture des véhicules combinés hydrocureurs actuellement proposés sur le marché.

Conformément à l'invention, l'opérateur peut ainsi très facilement sélectionner le réglage du bras de travail télescopique en position ouverte ou en position fermée en fonction de la géométrie du chantier.

Selon une autre caractéristique de l'invention, le bras de travail télescopique est monté sur une pièce de liaison articulée autour de l'axe de réglage vertical sur l'ossature du tambour d'enroulement du tuyau d'aspiration.

Un vérin de réglage hydraulique commande la rotation de la pièce de liaison autour de l'axe de réglage vertical et par suite le déplacement entre la position ouverte et la position fermée du bras de travail télescopique qui est solidaire en rotation dans un plan horizontal de la pièce de liaison.

Cette caractéristique permet de simplifier notablement le montage du bras de travail télescopique sur l'ossature du tambour d'enroulement du tuyau d'aspiration.

De plus, selon une autre caractéristique de l'invention, le bras de travail télescopique qui est solidaire en rotation dans un plan horizontal de la pièce de liaison est en outre avantageusement articulé sur cette pièce autour d'un axe de pivotement horizontal de façon à permettre d'incliner le tuyau d'aspiration en fonction de la géométrie du chantier pour faciliter le travail.

Cette articulation permet, de préférence, d'incliner le bras de travail télescopique vers le haut d'environ 15° et vers le bas d'environ 10°, et est avantageusement commandée par un vérin de pivotement hydraulique coopérant à cet effet avec la pièce de liaison et avec le bras de pivotement télescopique.

Selon une caractéristique particulièrement avantageuse de l'invention, le véhicule combiné hydrocureur est équipé d'un système de caméras à 360° permettant de reconstituer en cabine une image correspondant à une vue aérienne de ce véhicule et de son environnement proche sur laquelle la zone de couverture est représentée à l'échelle.

Ce système de caméra peut avantageusement comporter quatre caméras positionnées sur chaque côté du véhicule combiné hydrocureur.

L'image ainsi reconstituée en cabine permet à l'opérateur de positionner le véhicule de façon optimum à proximité du chantier dans la zone de couverture de celui-ci, ce sans avoir à descendre de sa cabine, ce qui est, là encore, de nature à faciliter notablement le travail et en outre d'augmenter, dans une large mesure, la sécurité.

Selon une autre caractéristique particulièrement avantageuse de l'invention, le véhicule combiné hydrocureur coopère avec une télécommande permettant de commander à distance l'actionnement des différents composants de travail, en particulier le déplacement du bras de travail télescopique.

Conformément à l'invention, cette commande à distance peut avantageusement être mise en œuvre en utilisant au moins deux joysticks qui commandent respectivement la montée et la descente du bras de travail télescopique et son déplacement dans un plan horizontal.

L'opérateur peut ainsi gérer l'actionnement du véhicule combiné hydrocureur en indiquant uniquement sur les joysticks les directions de déplacement du bras de travail télescopique, ce sans préciser les différents mouvements des composants de travail (rotation du tambour d'enroulement du tuyau d'aspiration, déploiement ou rétraction du bras de travail télescopique...) qui sont automatisés.

Selon une autre caractéristique de l'invention, la cuve à boues de la citerne est équipée à l'arrière du véhicule combiné hydrocureur d'un fond ouvrant ainsi que d'une bavette équipée d'un support permettant le stockage du tuyau d'aspiration ainsi que du flexible de nettoyage et de tous les accessoires nécessaires au nettoyage.

Lors de l'opération de vidange de la cuve à boues, ces composants peuvent rester en place, ce qui est de nature à simplifier notablement cette opération et à en réduire dans une large mesure la durée du fait qu'il n'est alors pas nécessaire de déployer le système pour ouvrir le fond.

Il est à noter que la configuration susmentionnée des différents composants du véhicule combiné hydrocureur permet de réduire notablement son encombrement lors du transport et de pouvoir les installer sur des citernes de petites dimensions.

### Présentation des dessins

Les caractéristiques du véhicule combiné hydrocureur qui fait l'objet de l'invention seront décrites plus en détail en se référant aux dessins non limitatifs annexés dans lesquels :
[fig.1] est un schéma illustratif des éléments essentiels du véhicule combiné hydrocureur,
[fig. 2] est un schéma illustrant l'articulation du bras de travail télescopique sur l'ossature du tambour d'enroulement du tuyau de remplissage,
[fig. 3] est un schéma illustrant la configuration de ce bras de travail télescopique au niveau de son extrémité libre,
[fig. 4] est un schéma illustrant la zone de couverture du véhicule combiné hydrocureur.

### Description d'un mode de réalisation de l'invention

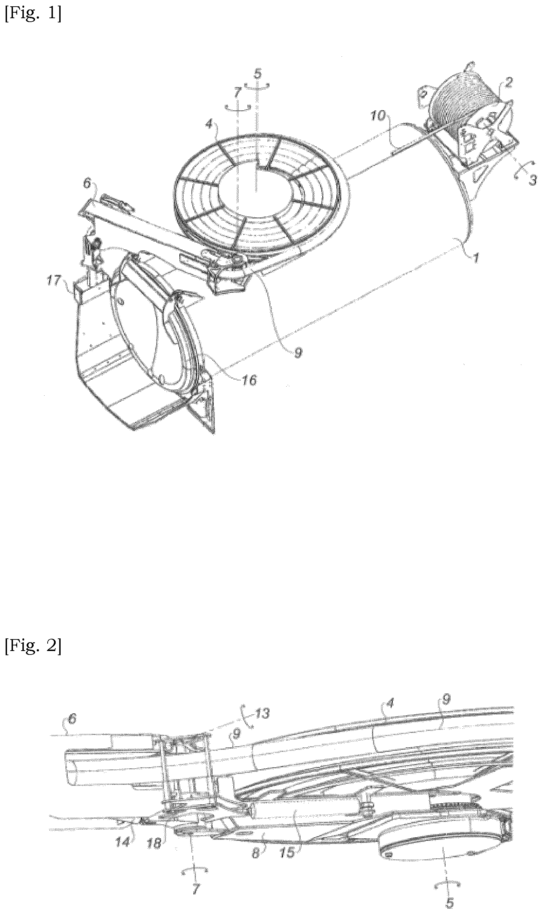

Selon la figure 1, le véhicule combiné hydrocureur est essentiellement constitué par un tracteur ou par un porteur non représenté coopérant avec une citerne 1.

Cette citerne 1 est subdivisée à sa partie interne en deux compartiments non représentés, à savoir une cuve à boues située à l'arrière du véhicule et fermée par un fond ouvrant 16 et une cuve à eau non représentée.

La cuve à boues est équipée d'une pompe à vide et d'un tuyau de remplissage raccordé à un tuyau d'aspiration 9 enroulé sur un tambour 4 mobile en rotation autour d'un axe vertical 5.

La cuve à eau est équipée d'une pompe haute pression et d'un flexible de nettoyage 10 enroulé sur un enrouleur 2 mobile en rotation autour d'un axe horizontal 3.

Le tambour d'enroulement 4 du tuyau d'aspiration 9 et l'enrouleur 2 du flexible de nettoyage 10 sont montés à la partie supérieure de la citerne 1.

Cette citerne 1 est également équipée à sa partie arrière d'une bavette 17 équipée d'un support.

Cette bavette 17 permet le stockage des accessoires nécessaires au nettoyage, diminuant ainsi les temps de mise en place et de rangement de ceux-ci pendant la phase d'exploitation.

Le tuyau d'aspiration 9 et le flexible de nettoyage 10 passent dans un bras de travail télescopique 6 et sont guidés par ce bras au cours de leur enroulement et de leur déroulement.

Selon la figure 2, le tambour d'enroulement 4 du tuyau d'aspiration 9 est monté sur une ossature 8 également mobile en rotation autour de l'axe vertical 5.

Le tambour d'enroulement 4 est mobile en rotation par rapport à l'ossature 8.

Le bras de travail télescopique 6 est monté solidairement en rotation dans un plan horizontal sur une pièce de liaison 18 articulée sur l'ossature 8 du tambour d'enroulement 4 du tuyau d'aspiration 9 autour d'un axe de réglage vertical 7.

La rotation de la pièce de liaison 18 par rapport- à l'ossature 8 du tambour d'enroulement 4 du tuyau d'aspiration 9 est commandée par un vérin hydraulique 15.

Le bras de travail télescopique 6 est non seulement monté solidairement en rotation dans un plan horizontal autour de l'axe de réglage 7 sur la pièce de liaison 18, mais est également articulé sur cette pièce de liaison 18 autour d'un axe de pivotement horizontal 13 permettant de l'incliner par rapport à l'horizontale.

Un vérin hydraulique 14 coopère avec la pièce de liaison 18 et le bras de travail télescopique 6 pour commander cette inclinaison.

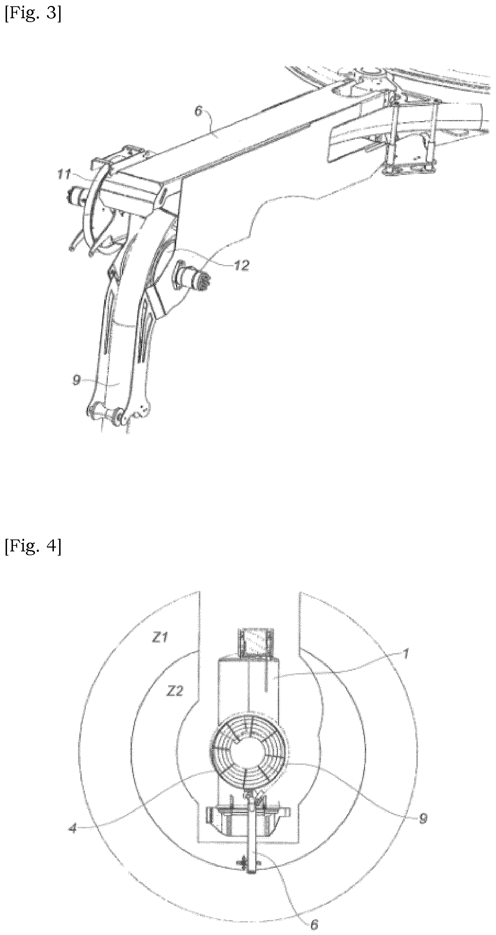

La rotation du bras de travail télescopique 6 autour de l'axe de réglage vertical 7 par rapport à l'ossature 8 du tambour d'enroulement 4 du tuyau d'aspiration 9 permet de déplacer ce bras 6 entre une position ouverte représentée sur la figure 4 dans laquelle il est orienté essentiellement radialement par rapport au tambour d'enroulement 4 du tuyau d'aspiration 9 et une position fermée représentée sur la figure 1 dans laquelle il est rabattu vers ce tambour d'enroulement 4.

Selon la figure 4, lorsque le bras de travail télescopique 6 est en position ouverte, la zone de recouvrement Z1 du véhicule ou zone de recouvrement éloignée est distante de celui-ci de la longueur de ce bras télescopique 6, de la position rétractée à la position déployéee.

Lorsque le bras de travail télescopique 6 est en position rétractée cette zone de recouvrement Z2 ou zone de recouvrement rapprochée (représentée en grisé sur la figure 4) est plus proche du véhicule.

Cette zone est obtenue par le positionnement du bras de travail télescopique 6 de sa position fermée à sa position ouverte associé à la rotation de l'ossature 8 par rapport à l'axe 5.

Selon la figure 3, le bras de travail télescopique 6 est, par ailleurs, équipé, à son extrémité libre, d'un dispositif de déroulement automatique 12 du tuyau d'aspiration 9 ainsi que d'un dispositif de déroulement automatique 11 du flexible de nettoyage 10.

### NOMENCLATURE DES ELEMENTS PRINCIPAUX

- 1: Citerne
- 2: Enrouleur du flexible de nettoyage
- 3: Axe horizontal
- 4: Tambour d'enroulement du tuyau d'aspiration
- 5: Axe vertical
- 6: Bras de travail télescopique
- 7: Axe de réglage vertical
- 8: Ossature
- 9: Tuyau d'aspiration
- 10: Flexible de nettoyage
- 11: Dispositif de déroulement du flexible de nettoyage
- 12: Dispositif de déroulement du tuyau d'aspiration
- 13: Axe de pivotement horizontal
- 14: Vérin hydraulique
- 15: Vérin hydraulique
- 16: Fond ouvrant
- 17: Bavette
- 18: Pièce de liaison
- Z1: Zone de recouvrement éloignée
- Z2: Zone de recouvrement proche

## Revendications

1. Véhicule combiné hydrocureur constitué par un tracteur ou un porteur coopérant avec une citerne (1) comportant à sa partie interne, d'une part, un premier compartiment ou cuve à boues situé à l'arrière du véhicule et équipé d'une pompe à vide raccordée à un tuyau d'aspiration (9) enroulé sur un tambour rotatif fixé à une ossature (8) mobile en rotation autour d'un axe vertical (5), montée à la partie supérieure de la citerne (1) et d'autre part, un second compartiment ou cuve à eau équipé d'une pompe haute pression et d'un flexible de nettoyage (10) enroulé sur un enrouleur (2) mobile en rotation autour d'un axe horizontal (3) monté également à la partie supérieure de la citerne (1) à l'avant du tambour d'enroulement (4) du tuyau d'aspiration (9), ainsi qu'avec un bras de travail télescopique (6) mobile entre une position déployée et une position rétractée et portant et guidant le tuyau d'aspiration (9) et le flexible de nettoyage (10) au cours de leur enroulement et de leur déroulement, **caractérisé en ce que** le bras de travail télescopique (6) est équipé à son extrémité libre d'un dispositif de déroulement automatique (12) du tuyau d'aspiration (9) ainsi que d'un dispositif de déroulement automatique (11) du flexible de nettoyage (10) et est articulé autour d'un axe de réglage vertical (7) solidaire de l'ossature (8) du tambour d'enroulement (4) du tuyau d'aspiration (9) de façon à pouvoir être déplacé entre , d'une part, une position ouverte dans laquelle il est orienté essentiellement radialement par rapport au tambour d'enroulement (4) du tuyau d'aspiration (9) et d'autre part, une position fermée dans laquelle il est rabattu vers ce tambour d'enroulement (4) pour permettre de rapprocher du véhicule la zone de couverture (Z1, Z2) de celui-ci.

2. Véhicule combiné hydrocureur conforme à la revendication 1, **caractérisé en ce que** l'angle du bras de travail télescopique (6) entre la position ouverte et la position fermée est de l'ordre de 110°.

3. Véhicule combiné hydrocureur conforme à l'une des revendications 1 et 2, **caractérisé en ce que** le bras de travail télescopique (6) est monté sur une pièce de liaison (18) articulée sur l'ossature (8) du tambour d'enroulement (4) du tuyau d'aspiration (9) autour de l'axe de réglage vertical (7) et coopérant avec un vérin de réglage hydraulique (15) pour permettre de la déplacer et par suite de déplacer le bras de travail télescopique (6) entre la position ouverte et la position fermée.

4. Véhicule combiné hydrocureur conforme à la revendication 3, **caractérisé en ce que** le bras de travail télescopique (6) est articulé sur la pièce de liaison (18) autour d'un axe de pivotement horizontal (13) permettant de préférence d'incliner le tuyau d'aspiration (9) vers le haut d'environ 15° et vers le bas d'environ 10°.

5. Véhicule combiné hydrocureur conforme à la revendication 4, **caractérisé en ce que** la pièce de liaison (18) coopère avec un vérin de pivotement hydraulique (14).

6. Véhicule combiné hydrocureur conforme à l'une quelconque des revendications 1 à 5, **caractérisé en ce qu'**il est équipé d'un système de caméras à 360° permettant de reconstituer en cabine une image correspondant à une vue aérienne de ce véhicule et de son environnement proche sur laquelle la zone de couverture est représentée à l'échelle.

7. Véhicule combiné hydrocureur conforme à l'une des revendications 1 à 6, **caractérisé en ce qu'**il coopère avec une télécommande permettant de commander à distance l'actionnement des différents composants de travail et en particulier le déplacement du bras de travail télescopique.

8. Véhicule combiné hydrocureur conforme à l'une quelconque des revendications 1 à 7, dans lequel la cuve à boues de la citerne (1) est équipée d'un fond ouvrant (16) situé à l'arrière du véhicule, **caractérisé par** une bavette (17) équipée d'un support permettant le stockage à demeure du tuyau d'aspiration (9) ainsi que du flexible de nettoyage (10) et de leurs accessoires nécessaires au nettoyage située à l'arrière de la citerne (1).

## Patentansprüche

1. Kombiniertes Rohrreinigungsfahrzeug, das aus einer Zugmaschine oder einer Tragmaschine gebildet ist, die mit einem Tank (1) zusammenwirkt, umfassend, an seinem inneren Abschnitt, einerseits eine erste Kammer oder einen Schlammbehälter, die bzw. der sich im hinteren Teil des Fahrzeugs befindet und mit einer Vakuumpumpe ausgestattet ist, die mit einem Saugschlauch (9) verbunden ist, der um eine Drehtrommel gewickelt ist, die an einem Rahmen (8) befestigt ist, der drehbar um eine vertikale Achse (5) beweglich ist und an dem oberen Abschnitt des Tanks (1) montiert ist, und andererseits eine zweite Kammer oder einen Wasserbehälter, die bzw. der mit einer Hochdruckpumpe und einem Reinigungsschlauch (10) ausgestattet ist, der auf einen Aufwickler (2) gewickelt ist, der drehbar um eine horizontale Achse (3) beweglich ist und ebenfalls im oberen Abschnitt des Tanks (1) vor der Wickeltrommel (4) für den Saugschlauch (9) montiert ist, sowie mit einem Teleskoparbeitsarm (6), der zwischen einer ausgefahrenen Position und eine eingefahrenen Position beweglich ist und den Saugschlauch (9) und den Reinigungsschlauch (10) während ihrer Aufwicklung und ihrer Abwicklung trägt und leitet, **dadurch gekennzeichnet, dass** der Teleskoparbeitsarm (6) an seinem freien Ende mit einer automatischen Abwicklungsvorrichtung (12) für den Saugschlauch (9) sowie einer automatischen Abwicklungsvorrichtung (11) für den Reinigungsschlauch (10) ausgestattet ist und um eine vertikale Stellachse (7), die einstückig mit dem Rahmen (8) der Wickeltrommel (4) für den Saugschlauch (9) ausgebildet ist, derart angelenkt ist, dass er zwischen einerseits einer geöffneten Position, in welcher er im Wesentlichen radial in Bezug auf die Wickeltrommel (4) für den Saugschlauch (9) ausgerichtet ist, und andererseits einer geschlossenen Position, in welcher er gegen diese Wickeltrommel (4) geklappt ist, um zu ermöglichen, dass das Fahrzeug an die Abdeckungszone (Z1, Z2) davon angenähert werden kann, beweglich ist.

2. Kombiniertes Rohrreinigungsfahrzeug nach Anspruch 1, **dadurch gekennzeichnet, dass** der Winkel des Teleskoparbeitsarms (6) zwischen der geöffneten Position und der geschlossenen Position im Bereich von 110° liegt.

3. Kombiniertes Rohrreinigungsfahrzeug nach einem der Ansprüche 1 und 2, **dadurch gekennzeichnet, dass** der Teleskoparbeitsarm (6) an einem Verbindungsstück (18) montiert ist, das an dem Rahmen (8) der Wickeltrommel (4) für den Saugschlauch (9) um die vertikale Stellachse (7) angelenkt ist und mit einem hydraulischen Stellzylinder (15) zusammenwirkt, um zu ermöglichen, dieses zu verschieben und damit den Teleskoparbeitsarm (6) zwischen der geöffneten Position und der geschlossenen Position zu verschieben.

4. Kombiniertes Rohrreinigungsfahrzeug nach Anspruch 3, **dadurch gekennzeichnet, dass** der Teleskoparbeitsarm (6) an dem Verbindungsstück (18) um eine horizontale Schwenkachse (13) angelenkt ist, die es bevorzugt ermöglicht, den Saugschlauch (9) nach oben um etwa 15° und nach unten um etwa 10° zu neigen.

5. Kombiniertes Rohrreinigungsfahrzeug nach Anspruch 4, **dadurch gekennzeichnet, dass** das Verbindungsstück (18) mit einem hydraulischen Schwenkzylinder (14) zusammenwirkt.

6. Kombiniertes Rohrreinigungsfahrzeug nach einem der Ansprüche 1 bis 5, **dadurch gekennzeichnet, dass** es mit einem System aus 360°-Kameras ausgestattet ist, das es ermöglicht, in der Kabine ein Bild zu rekonstruieren, das einer Luftaufnahme des Fahrzeugs und seiner näheren Umgebung entspricht und auf dem die Abdeckungszone maßstabsgetreu dargestellt ist.

7. Kombiniertes Rohrreinigungsfahrzeug nach einem der Ansprüche 1 bis 6, **dadurch gekennzeichnet, dass** es mit einer Fernsteuerung zusammenwirkt, die es ermöglicht, die Betätigung verschiedener Arbeitskomponenten und insbesondere die Verschiebung des Teleskoparbeitsarms aus der Ferne zu steuern.

8. Kombiniertes Rohrreinigungsfahrzeug nach einem der Ansprüche 1 bis 7, **dadurch gekennzeichnet**, wobei der Schlammbehälter des Tanks (1) mit einem öffenbaren Boden (16) ausgestattet ist, der sich im hinteren Teil des Fahrzeugs befindet, **gekennzeichnet durch** einen Schmutzfänger (17), der mit einer Ablage ausgestattet ist, welche die dauerhafte Lagerung des Saugschlauches (9) sowie des Reinigungsschlauchs (10) und ihres nötigen Reinigungszubehörs ermöglicht, die sich im hinteren Teil des Tanks (1) befinden.

## Claims

1. Combined sewer cleaning vehicle which is constituted by a tractor or a carrier which cooperates with a vessel (1) comprising at the inner portion thereof, on the one hand, a first sludge compartment or tank located at the rear of the vehicle and which is provided with a vacuum pump which is connected to a suction pipe (9) which is wound on a rotating drum which is fixed to a framework (8) which can be moved in terms of rotation about a vertical axis (5) and which is mounted on the upper portion of the vessel (1) and, on the other hand, a second water compartment or tank which is provided with a high-pressure pump and a cleaning hose (10) which is wound on a winder (2) which can be moved in terms of rotation about a horizontal axis (3) and which is also mounted on the upper portion of the vessel (1) in front of the winding drum (4) of the suction pipe (9), and with a telescope-like working arm (6) which can be moved between a deployed position and a retracted position and which carries and guides the suction pipe (9) and the cleaning hose (10) during the winding and unwinding thereof, **characterised in that** the telescope-like working arm (6) is provided at the free end thereof with an automatic device (12) for unwinding the suction pipe (9) and an automatic device (11) for unwinding the cleaning hose (10) and is articulated about a vertical control axle (7) which is fixedly joined to the framework (8) of the winding drum (4) of the suction pipe (9) in order to be able to be moved between, on the one hand, an open position, in which it is orientated substantially radially relative to the winding drum (4) of the suction pipe (9) and, on the other hand, a closed position, in which it is folded up towards this winding drum (4) in order to enable the vehicle to be moved closer to the coverage zone (Z1, Z2) thereof.

2. Combined sewer cleaning vehicle according to claim 1, **characterised in that** the angle of the telescope-like working arm (6) between the open position and the closed position is in the order of 110°.

3. Combined sewer cleaning vehicle according to either claim 1 or claim 2, **characterised in that** the telescope-like working arm (6) is mounted on a connection component (18) which is articulated to the framework (8) of the winding drum (4) of the suction pipe (9) about the vertical control axle (7) and which cooperates with a hydraulic control actuator (15) in order to enable it to be moved and consequently allows the telescope-like working arm (6) to be moved between the open position and the closed position.

4. Combined sewer cleaning vehicle according to claim 3, **characterised in that** the telescope-like working arm (6) is articulated to the connection component (18) about a horizontal pivot axis (13) which preferably enables the suction pipe (9) to be inclined upwards by approximately 15° and downwards by approximately 10°.

5. Combined sewer cleaning vehicle according to claim 4, **characterised in that** the connection component (18) cooperates with a hydraulic pivoting actuator (14).

6. Combined sewer cleaning vehicle according to any one of claims 1 to 5, **characterised in that** it is provided with a 360° camera system which enables an image which corresponds to an aerial view of this vehicle and the surrounding environment thereof and on which the coverage zone is depicted to scale, to be reproduced in the cab.

7. Combined sewer cleaning vehicle according to any one of claims 1 to 6, **characterised in that** it cooperates with a remote control unit which enables the activation of the different working components and in particular the movement of the telescope-like working arm to be controlled remotely.

8. Combined sewer cleaning vehicle according to any one of claims 1 to 7, wherein the sludge tank of the vessel (1) is provided with an opening base (16) which is located at the rear of the vehicle, **characterised by** a flap (17) which is provided with a support which enables permanent storage of the suction pipe (9) and the cleaning hose (10) and the accessories thereof which are required for cleaning and which are located at the rear of the vessel (1).
